# EUROPÄISCHE PATENTSCHRIFT

(11) **EP 0 827 214 B1**
(45) Veröffentlichungstag und Bekanntmachung des Hinweises auf die Patenterteilung: **30.05.2001**
(21) Anmeldenummer: 97112869.9
(22) Anmeldetag: 25.07.1997
(51) Int. Cl.: H01L 33/00, G02B 6/42

(54) **Verfahren und Vorrichtung zum Herstellen von Linsen mikrooptischer Systeme**
Procedure and apparatus used to manufacture lenses of micro-optical systems
Procédé et appareil pour fabriquer les lentilles de systèmes microoptiques

(30) Priorität: 06.08.1996 DE 19631736
(43) Veröffentlichungstag der Anmeldung: 04.03.1998
(73) Patentinhaber: STM Sensor Technologie München GmbH, 82024 Taufkirchen (DE)
(72) Erfinder: Melzner, Edgar, 81739 München (DE)
(74) Vertreter: Viering, Jentschura & Partner

(56) Entgegenhaltungen:
- US-A- 4 440 699
- US-A- 4 716 851
- US-A- 5 534 101
- PATENT ABSTRACTS OF JAPAN vol. 005, no. 113 (E-066), 22.Juli 1981 & JP 56 050587 A (NEC CORP), 7.Mai 1981,
- PATENT ABSTRACTS OF JAPAN vol. 012, no. 017 (E-574), 19.Januar 1988 & JP 62 174980 A (MITSUBISHI CABLE IND LTD), 31.Juli 1987,
- PATENT ABSTRACTS OF JAPAN vol. 010, no. 340 (E-455), 18.November 1986 & JP 61 144890 A (STANLEY ELECTRIC CO LTD), 2.Juli 1986,
- PATENT ABSTRACTS OF JAPAN vol. 008, no. 025 (E-225), 2.Februar 1984 & JP 58 186977 A (TOKYO SHIBAURA DENKI KK), 1.November 1983,
- PATENT ABSTRACTS OF JAPAN vol. 009, no. 284 (E-357), 12.November 1985 & JP 60 126874 A (TOSHIBA KK), 6.Juli 1985,
- PATENT ABSTRACTS OF JAPAN vol. 009, no. 169 (E-328), 13.Juli 1985 & JP 60 042880 A (SUMITOMO DENKI KOGYO KK), 7.März 1985,
- GOERNEMANN K: "LICHTEMITTERDIODEN VQA 101, VQA 201, VQA 301, VQA 102 UND VQA 202" RADIO FERNSEHEN ELEKTRONIK, Bd. 38, Nr. 5, 1989, Seite 301/302 XP000037453

## Beschreibung

Die Erfindung betrifft ein Verfahren und eine Vorrichtung zum Herstellen von Linsen optischer Systeme, insbesondere mikrooptischer Sensorsysteme und mikrooptischer Übertragungssysteme.

Es ist bekannt, Linsen mikrooptischer Systeme herzustellen, indem ein transparentes aushärtbares flüssiges Linsenmaterial in die gewünschte Linsenform gegossen wird. Die auf diese Weise gegossenen Linsen werden dann zusammen mit ebenfalls in dem mikrooptischen System vorgesehenen Optoelementen, wie Lichtemittern oder Lichtsensoren an einem geeigneten Linsenträger befestigt und dabei in die gewünschte relative Lage zueinander gebracht. Die Befestigung erfolgt dabei überwiegend mit Hilfe von Klebstoffen.

Bei der Herstellung von Miniaturlinsen, wie sie z.B. für die Strahlenbündelung in Miniaturlichtschrankensystemen verwendet werden, führt diese Herstellungsweise zu großen Schwierigkeiten, wenn gleichzeitig entsprechende Anforderungen an die Qualität der Abbildung gefordert werden. Die mikrooptischen Systeme müssen mit hoher Fertigungsgenauigkeit hergestellt werden, damit tatsächlich der gewünschte optische Effekt, z.B. eine Strahlenbündelung, erzielt werden kann. Insbesondere muß die axiale Lage der Linse relativ zu der Lichtquelle oder dem Lichtsensor sehr genau eingehalten sein bzw. auf die genaue Wölbung der hergestellten Linse abgestimmt sein. Aber auch eine seitliche Lageungenauigkeit der Linse gegenüber der optischen Achse oder eine Verkippung gegenüber der optischen Achse kann zu einer mangelhaften Funktionsfähigkeit des gefertigten mikrooptischen Systems führen.

Es wird versucht, diesem Problem dadurch zu begegnen, daß ein hoher meßtechnischer Aufwand betrieben wird, um beim Einkleben der vorgefertigten Linse in das mikrooptische System eine vorbestimmte axiale Lage einzuhalten. Andererseits werden die gefertigten mikrooptischen Systeme intensiven Qualitätskontrollen unterworfen. Wenn ein bestimmtes Ergebnis gefordert ist, können nur diejenigen Stücke genutzt werden, deren optische Eigenschaften innerhalb einer engen Bandbreite liegen. Es kommt dann entweder zu hohen Ausschußanteilen, die enorm hohe Kosten verursachen, oder die Stücke schlechterer Qualität werden dennoch verwendet und es muß eine schlechtere optische Verarbeitung in Kauf genommen werden.

Vor allem hochwertige Miniaturlichtschrankensysteme, bei denen eine Mehrzahl von Linsen mit hoher Genauigkigkeit erforderlich sind, lassen sich mit herkömmlichem Verfahren und der damit verbundenen herkömmlichen Gestaltung nicht bei vertretbarem Herstellungsaufwand fertigen.

Mit der Erfindung wird die Aufgabe gelöst, ein Verfahren und eine Vorrichtung zum Herstellen von Linsen optischer Systeme, insbesondere mikrooptischer Linsensysteme, derart zu schaffen, daß die Linsen derart hergestellt werden können, daß die gewünschten optischen Eigenschaften des mikrooptischen Systems, für das die Linse vorgesehen ist, mit hoher Genauigkeit eingehalten werden.

Hinsichtlich des Verfahrens wird die Aufgabe erfindungsgemäß mit einem Verfahren zum Herstellen von Linsen mikrooptischer Systeme mit den Merkmalen gemäß Anspruch 1 oder 2 gelöst.

Mit dem erfindungsgemäßen Vorschlag, die Linse an Ort und Stelle in dem bereits zusammengebauten mikrooptischen System herzustellen und während des Herstellungsvorgangs ein von dem optischen System in dem aktuellen Herstellungsstadium erzeugtes optisches Momentanergebnis dazu heranzuziehen, den weiteren Verlauf des Herstellungsvorgangs zu bestimmen, wird erreicht, daß die Lage der hergestellten Linse in dem optischen System und ihre Gestalt derart aufeinander abgestimmt werden, daß ein gewünschtes optisches Zielergebnis erreicht wird.

Beim Einfüllen des aushärtbaren flüssigen transparenten Linsenmaterials, d.h. insbesondere eines transparenten Kunststoffmaterials, in eine Fassung, deren Abmessungen in einer Größenordnung liegen, in der die Oberflächenspannungseffekte gegenüber anderen Kräften, wie z.B. der Schwerkraft, eine bedeutende Rolle spielen, insbesondere in eine Fassung für eine Miniaturlinse, bildet sich an der freien Öffnung ein Meniskus aus, der die aktuelle Linsenoberfläche darstellt. Sind die Kohäsionskräfte die den Vorgang überwiegend beherrschenden Kräfte, entsteht dabei in homogenen Flüssigkeiten im wesentlichen eine kugelförmige Oberfläche.

Mit der Zugabe von Material verändert sich die Wölbung der Linsenoberfläche und wandert der Scheitel des Meniskus. Die Umfangslinie der Linsenoberfläche verharrt im wesentlichen an der gleichen Stelle der Fassung, sie wird z.B. an einer dafür vorgesehenen Kante eingefroren. Bei einer röhrchenartigen Fassung kann sich z.B. der Scheitel allmählich von innerhalb der Fassung in die Röhrchenöffnung und schließlich in einen Bereich außerhalb der Fassung verlagern. Da der Rand der gewölbten Linsenoberfläche im wesentlichen an der gleichen Stelle an der Fassung verbleibt, also z.B. an der Röhrchenöffnung, verändert sich gleichzeitig die Wölbung von konkav zu konvex. Mit dem Einfüllen von Linsenmaterial bewegt sich also gleichzeitig der Scheitel der Linsenfläche relativ zur Fassung und die Wölbung der Linsenfläche verändert sich, z.B. von konkav zu konvex. Die Fassung muß erfindungsgemäß nicht zwangsläufig ein Röhrchen sein. Sie kann z.B. auch in dem den Rand einer Öffnung bildenden Bereich eines geeigneten Bauteils bestehen. Eine Fassung kann z.B. auch aus einem Ring aus Draht oder einem anderen geeigneten Material gebildet sein. Im Falle der Ausbildung als schmaler Ring bilden sich beim Befüllen zwei konvexe Linsenflächen, deren Wölbung bei Materialzugabe zunehmend konvex wird. Erfindungsgemäß kann die Fassung eine beliebige geeignete Gestaltung aufweisen. Es können in der Fassung auch Randkonturen vorgesehen sein, die von der Kreisform abweichen. Eine ovale Randkontur in der Fassung führt z.B. dazu, daß sich eine Linsenfläche in Form eines Ellipsoidabschnitts ausbildet.

Das gebildete optische System durchläuft also eine bestimmte Reihe von Kombinationen aus der Relativlage der gebildeten Linse zu den übrigen Systemelementen und aus der Form der gebildeten Linse.

Auch das gewünschte, von dem mikrooptischen System zu erzielende Ergebnis kann in der Regel durch eine Vielzahl von Kombinationen aus relativer Lage und Wölbungsform der Linse erzeugt werden. Meist existiert genau eine Kombination aus Linsenlage und Linsenwölbung, die sowohl während des Auffüllvorgangs an der Fassung durchlaufen wird als auch zu der Schar der gewünschten Lösungen gehört. Das mikrooptische System mit den gewünschten Eigenschaften wird daher ganz einfach dadurch erzielt, daß der Auffüllvorgang mit flüssigem transparenten Linsenmaterial solange durchgeführt wird, bis genau diese Kombination verwirklicht ist. Durch Abbrechen des Auffüllvorgangs und Aushärten des Linsenmaterials kann dann die erhaltene Linsenform konserviert werden.

Dadurch, daß der Herstellungsvorgang direkt mit einem optischen Verarbeitungsergebnis des mikrooptischen Systems als Kontrollgröße durchgeführt wird, werden meßtechnisch bedingte systematische Fehler ausgeschlossen und wird eine hohe Genauigkeit des mikrooptischen Systems ermöglicht.

Dadurch, daß beim Herstellen der Linse die übrigen zum mikrooptischen System gehörenden Bauelemente, nämlich die Fassung und das Optoelement bzw. gegebenenfalls andere Linsenflächen bereits in der Lage zueinander angeordnet sind, in der sie auch im fertiggestellten mikrooptischen System zueinander angeordnet sein sollen, und die Linse, indem sie in der Fassung an einer definierten Stelle, z.B. einer scharfen Kante, ausgebildet wird, auch genau in derjenigen Lage hergestellt wird, die sie auch im fertiggestellten mikrooptischen System relativ zu den anderen Bauelementen einnimmt, werden fertigungs- bzw. montagetechnisch bedingte Fehler beim Herstellen der Relativlage ausgeschlossen und wird so die hohe Genauigkeit des mikrooptischen Systems sichergestellt.

Je nach Ausführungsform besteht ggf. die Möglichkeit, einzelne Bauteile auch nach dem Herstellen der Linse noch einmal voneinander zu lösen. Es müssen dann Mittel vorgesehen sein, die sicherstellen, daß sich die gleiche Relativlage beim anschließenden Zusammensetzen wieder einstellt.

Entweder wird das Bild eines Lichtstrahls als Kontrollgröße verwendet, der von genau dem Lichtemitter aus, der auch in dem fertiggestellten System Lichtstrahlen aussendet, das mikrooptische System durchläuft, oder es wird das infolge eines Lichtstrahls, der das mikrooptische System durchläuft, in genau demjenigen Lichtsensor (z.B. Fotodiode) gewandelte Signal als Kontrollgröße verwendet, der in dem fertiggestellten mikrooptischen System als Sensor Lichtstrahlen verarbeitet. Bei beiden Alternativen wird der weitere Fertigungsvorgang abhängig von dem aktuellen Verarbeitungsergebnis des mikrooptischen Systems in dem augenblicklichen Herstellungszustand der Linse gesteuert. Dadurch wird erreicht, daß das beim Herstellungsvorgang verwendete optische Ergebnis, also ein Lichtstrahl, der eine bestimmte Gestalt und Intensität aufweist, auf einer optischen Verarbeitung basiert, die der Verarbeitung entspricht, die beim bestimmungsgemäßen Einsatz des mikrooptischen Systems stattfindet.

Ist das Optoelement ein Lichtsensor, kann es z.B. ein fotoempfindliches Element wie eine Fotodiode oder ein Fototransistor oder ein sonstiger geeigneter Lichtsensor sein. Ist ein Lichtemitter als Optoelement vorgesehen, ist es möglich daß dafür eine Lichtquelle verwendet ist, d.h. ein Element, das selbst Licht erzeugt. Ebenso ist es jedoch möglich, daß ein anderer Lichtemitter vorgesehen ist, der lediglich Licht überträgt, wie z.B. ein Lichtleiter oder der Ausgang eines anderen geeigneten mikrooptischen Systems, an dessen Eingang ein Lichterzeuger angeordnet ist. Auch ein sonstiges Bauelement, das als Objekt von einer anderen Lichtquelle angestrahlt wird und Licht reflektiert, kann den Lichtemitter bilden.

Bevorzugt ist das Optoelement eine selbst Licht erzeugende Lichtquelle oder ein Lichtsensor. In diesem Fall eignet sich das erfindungsgemäße Verfahren besonders gut zur Herstellung von Lichtschranken- und Lichttaster-Senderelementen, wenn das Optoelement eine Lichtquelle ist, oder zur Herstellung von Lichtschranken- und Lichttaster-Empfängerelementen, wenn das Optoelement ein Optosensor ist.

Die Linse kann erfindungsgemäß durch bloßes Einfüllen des flüssigen Linsenmaterials in die Fassung geformt werden. Dabei bildet sich aufgrund der Kohäsionskräfte im wesentlichen eine sphärische Linsenfläche aus. Bevorzugt wird jedoch mittels gezielten Einsatzes von weiteren Kräften eine bestimmte asphärische Gestalt der Linsenfläche erzeugt, z.B. eine Ellipsoidfläche, die geeignet ist, die von einer Punktlichtquelle ausgehenden Lichtstrahlen zu parallelisieren, oder eine Fläche, die im wesentlichen eine Ellipsoidform hat. Eine solche asphärische Linsenfläche kann z.B. unter Einsatz von Gravitationskräften hergestellt werden. Dazu muß die Linsenfläche mit ihrer optischen Achse in Richtung der Schwerkraft ausgerichtet werden. Alternativ oder zusätzlich können Beschleunigungskräfte angewendet werden. Weitere mögliche Maßnahmen, um gezielt die Linsenform zu beeinflussen, sind die Temperaturerhöhung oder die Beigabe von Füllstoffen im Linsenmaterial. Beim Herstellen derartiger Spezial-Linsenformen ist die am momentanen optischen Verarbeitungsergebnis orientierte Steuerung des weiteren Fertigungsvorgangs besonders vorteilhaft, da bei derartigen Linsen besonders hohe Anforderungen an die Fertigungsgenauigkeit bestehen, die mittels dieses Verfahrens besonders gut erfüllt werden können.

Erfindungsgemäß ist es möglich, den Linsenherstellvorgang nur einmal durchzuführen, bis die Linse fertiggestellt ist. Das Einfüllen und Aushärten des Linsengußmaterials kann jedoch auch mehrmals durchgeführt werden, wodurch die gewünschte Linse in mehreren Stufen erstellt wird. Bevorzugt wird jedoch der Linsenherstellvorgang mehrmals hintereinander mit unterschiedlichen Linsengußmaterialien mit unterschiedlichen Brechungsindizes durchgeführt. Auf diese Weise können kostengünstig Achromaten hergestellt werden. Dabei können erfindungsgemäß auch mit anderen Fertigungsverfahren hergestellte Linsenelemente eingesetzt werden, an die dann mit dem erfindungsgemäßen Verfahren ein weiterer Linsenteil angebaut wird.

Der Vorgang des Einfüllens des transparenten aushärtbaren flüssigen Linsenmaterials in die Fassung kann erfindungsgemäß genau dann abgebrochen werden, wenn genau die Abbildung als optisches Ergebnis der Verarbeitung des mikrooptischen Systems erreicht ist, die der gewünschten Verarbeitung des herzustellenden mikrooptischen Systems entspricht. Bevorzugt wird jedoch mit dem Einfüllen in gewissem Umfang fortgefahren, um von vorneherein eine Schrumpfung des Linsenkörpers beim Aushärten des flüssigen Linsenmaterials zu berücksichtigen. Falls das Material schrumpft, ist eine definierte Zugabe von Material erforderlich, um sicherzustellen, daß die vollständig ausgehärtete Linse genau die Form und Lage einnimmt, mit der das gewünschte optische Ergebnis erzeugt wird. Das Ausmaß der Zugabe kann dabei an Erfahrungswerten oder empirisch ermittelten Daten orientiert sein. Es kann z.B. eine bestimmte prozentuale Veränderung der Bildgröße gegenüber dem gewünschten Bildergebnis bzw. der Signalgröße gegenüber der gewünschten Signalstärke abgewartet werden oder ein bestimmter Prozentsatz an Material hinzugegeben werden. Es ist auch möglich, die zu erwartende Veränderung der Abbildung und das Ausmaß der erforderlichen Materialzugabe mathematisch zu bestimmen.

Auch eine häufig auftretende Veränderung des Brechungsindex des Linsenmaterials beim Übergehen vom flüssigen zum ausgehärteten Zustand kann auf diese oder ähnliche Weise ausgeglichen werden. Je nachdem, in welche Richtung sich die Brechung verändert, wird entweder mehr oder weniger Material in die Fassung eingefüllt als bei noch flüssigem Linsenmaterial dem gewünschten Ergebnis entspricht.

Erfindungsgemäß ist es auch möglich, nach Abschluß des Herstellvorgangs die Gestalt der Linse zu korrigieren. Dies kann auf unterschiedliche Weise erfolgen. Eine Möglichkeit besteht darin, die Linsenkalotte abzunehmen und einen neuen Linsenherstellvorgang durchzuführen. Eine andere Möglichkeit liegt darin, die erstellte Linse mechanisch zu bearbeiten. Für den Fall, daß zu wenig Material eingefüllt wurde, besteht ebenso die Möglichkeit, nach dem Aushärten der Linse eine Schicht zusätzlichen Linsenmaterials aufzutragen, um so den gewünschten Zustand zu erreichen.

Erfindungsgemäß können die Fassung und das Optoelement sowie gegebenenfalls weitere optische Bauteile auf beliebige geeignete Weise in die gewünschte Relativlage zueinander gebracht werden. Bevorzugt wird aber die Fassung vor dem Einbringvorgang auf einen zylinderförmigen Träger aufgesteckt, auf dem das Optoelement angebracht ist. Die Fassung wird dann mit einer darin ausgebildeten Anschlagschulter gegen einen an dem zylinderförmigen Träger ausgebildeten Anschlag geschoben. Auf diese Weise wird formschlüssig die Relativlage zwischen Fassung und Optoelement hergestellt. Bei einer solchen Ausführungsform der Erfindung kann die Fassung ggf. auch nach dem Herstellvorgang noch einmal von dem Optoelement gelöst werden, um z.B. noch weitere optische Elemente in den Lichtgang einzufügen, und anschließend wieder ohne Schwierigkeiten in dieselbe Relativlage zu dem Optoelement gebracht werden.

Erfindungsgemäß kann das Verfahren mit einer einzigen Fassung und dem Optoelement durchgeführt werden. Bevorzugt wird jedoch vor dem Einbringvorgang eine zusätzliche Fassung, z.B. in Form eines Röhrchens, in eine vorbestimmte Relativlage zu der Fassung gebracht, die eine bereits vorgefertigte Linsenfläche trägt. Diese Linsenfläche kann z.B. an dem im Montagezustand dem Optoelement zugewandten Ende der zusätzlichen Fassung ausgebildet sein, so daß an der dem Optoelement abgewandten Seite der zusätzlichen Fassung zum Erstellen einer neuen Linse flüssiges Linsenmaterial eingefüllt werden kann, ohne daß die bereits vorhandene Linsenfläche verändert wird. Auf diese Weise ist es möglich, ein mehrstufiges Linsensystem mit mehreren unterschiedlich geformten Linsenflächen herzustellen, z.B. einer konkaven Linsenfläche auf der dem Optoelement zugewandten Seite und einer konvexen Linsenfläche an der von dem Optoelement abgewandten Seite. Dabei können gewölbte Linsenflächen auch einen Krümmungsradius unendlich aufweisen, also den Spezialfall einer ebenen Linsenfläche verwirklichen. Solche ebenen Linsenflächen können z.B. als Bestandteil einer plan-konvexen oder einer plan-konkaven Linse vorgesehen sein.

Erfindungsgemäß ist es möglich, daß bei der Fertigung der Linse gar keine oder nur Linsenflächen tragende zusätzliche Bauelemente eingesetzt werden. Bevorzugt wird jedoch vor dem Einbringvorgang des flüssigen Linsenmaterials relativ zu der Fassung in einer vorbestimmten Lage eine Blende angeordnet. Die Blende kann als unabhängiges Bauteil ausgestaltet sein, kann aber auch mit der Fassung verbunden sein oder mit einer weiteren Fassung verbunden sein, die eine vorgefertigte Linsenfläche aufweist. Auf diese Weise können mittels des erfindungsgemäßen Verfahrens mikrooptische Systeme hergestellt werden, die neben Linsenflächen auch Blenden aufweisen.

Hinsichtlich der Vorrichtung wird die Aufgabe erfindungsgemäß mit einer Vorrichtung zum Herstellen von Linsen mikrooptischer Systeme mit den Merkmalen gemäß Anspruch 8 oder Anspruch 10 gelöst.

Die hochgenaue Herstellung von Linsen mikrooptischer Systeme wird dabei erreicht, indem eine Vorrichtung geschaffen wird, die geeignet ist, das erfindungsgemäße Verfahren auszuführen. Die Ausgangslage der Bauelemente des mikrooptischen Systems wird mit Hilfe eines Halters sichergestellt. Mit der Dosiereinheit wird das flüssige Linsenmaterial in die Fassung eingefüllt.

Das optische Ergebnis, das mittels des mikrooptischen Systems während und am Ende des Fertigungsvorgangs erzielt wird, wird bei einer Ausführungsform der Erfindung, die zur Herstellung mikrooptischer Systeme mit einem Lichtemitter als Optoelement geeignet ist, mit dem Bildmesser aufgenommen und eine Steuereinheit ist derart gestaltet, daß sie das Zusammenwirken der anderen Vorrichtungsbaukomponenten im Sinne des erfindungsgemäßen Verfahrens ermöglicht.

Die Positionierbarkeit von dem Bildmesser, z.B. einer CCD-Kamera, und dem Halter mit der Fassung und dem Optoelement in einer definierten Lage relativ zueinander kann ohne ein besonderes Bauteil zur Abstandsmessung sichergestellt sein. Bevorzugt weist jedoch die Vorrichtung zum Herstellen von Linsen mikrooptischer Systeme einen Abstandmesser auf, mit dem der Abstand zwischen der Fassung und der Meßebene des Bildmessers meßbar ist.

Bei einer anderen Ausführungsform der erfindungsgemäßen Vorrichtung zum Herstellen von Linsen mikrooptischer Systeme, nämlich einer Ausführungsform, die zum Herstellen von Systemen mit einem Lichtsensor geeignet ist, ist neben dem Halter und der Dosiereinheit ein Signalmesser vorhanden, der das von dem mikrooptischen Sensor infolge von Lichteinfall erzeugte Signal mißt. Die Steuereinheit ist dann derart gestaltet, daß sie auf der Basis des gemessenen Signals das Zusammenwirken der anderen Vorrichtungsbaukomponenten im Sinne des erfindungsgemäßen Verfahrens steuert.

Durch ein erfindungsgemäßes Verfahren kann ein Lichtsender/Lichtempfängersystem mit einem Lichtsenderelement und/oder einem Lichtempfängerelement erhalten werden, wobei das Lichtsenderelement und/oder das Lichtempfängerelement eine ungeschliffene Linsenfläche, die von einem Linsengußmaterial gebildet ist und auf deren Randlinie zwei beliebig gewählte Randlinienpunkte einen Abstand von höchstens 5 mm aufweisen, eine Fassung, die das Linsengußmaterial trägt und an der eine umlaufende Kante ausgebildet ist, entlang der die Randlinie der Linsenfläche verläuft, und ein Optoelement aufweist, das bei dem Lichtsenderelement ein Lichtemitter und bei dem Lichtempfängerelement ein Lichtsensor ist.

Das hochgenaue Lichtsender/Lichtempfängersystem mit einem Lichtsenderelement und/oder einem Lichtempfängerelement wird dadurch verwirklicht, daß eine Gestaltung gewählt wird, die sich für die Herstellung zumindest einer Linsenfläche nach dem erfindungsgemäßen Verfahren besonders gut eignet. Dies wird erreicht, indem eine Linse aus Linsengußmaterial vorgesehen ist, insbesondere aus einem Kunststoffmaterial wie Epoxidharz. Dadurch, daß die Linse eine Größenordnung aufweist, in der Kapillarkräfte gegenüber Gravitationskräften und anderen Kräften dominierend sind, z.B. eine kreisförmige Randlinie von weniger als 5 mm Durchmesser, insbesondere weniger als 3 mm bzw. weniger als 1 mm, oder eine ovale Randlinie mit einer Hauptachse von den genannten Maximalabmessungen aufweist, eignet sich das erfindungsgemäße Herstellungsverfahren besser zur Herstellung des erfindungsgemäßen Lichtsender/Lichtempfängersystems als herkömmliche Verfahren. Es ist dadurch eine wenig aufwendige Herstellung des Lichtsender/Lichtempfängersystems möglich.

Dadurch, daß eine ungeschliffene Linsenfläche vorgesehen ist, entfallen zusätzliche kostenträchtige Herstellungsschritte. Durch das Vorsehen einer Kante an der Fassung ist sichergestellt, daß sich die Randlinie der Linsenfläche an einer definierten Stelle ausbildet und dort verharrt. Während des Auffüllvorgangs des Linsengußmaterials verändern sich infolgedessen mit Scheitellage und Linsenwölbung nur zwei Parameter und diese Veränderung geht sehr kontinuierlich vor sich, wodurch eine hochgenaue Herstellbarkeit des erfindungsgemäß hergestellten Lichtsender/Lichtempfängersystems gewährleistet ist.

Das erfindungsgemäß hergestellte Lichtsender/Lichtempfängersystem kann z.B. ein Miniaturlichtschrankensystem oder ein optisches Informationsübertragungssystem in Miniaturbauweise sein oder ein Teilsystem solcher Systeme.

Erfindungsgemäß ist es möglich, daß die relative Lage zwischen einer Fassung und dem ihr zugeordneten Optoelement bzw. dem Träger des Optoelements nicht bauartbedingt festgelegt ist oder mittels Reibschluß vorgesehen ist. Bevorzugt ist diese Relativlage jedoch mittels Formschluß, insbesondere mittels eines axialen Anschlags, festgelegt. Dadurch wird die Fertigungsgenauigkeit weiter verbessert. Ggf. ist auch eine Demontierbarkeit von Linse und Optoelement ermöglicht, so daß nachträglich zusätzliche Teile eingefügt werden können.

Ein Optoelement in dem Lichtsender/Lichtempfängersystem, insbesondere in einem Lichtschrankensystem, kann erfindungsgemäß freiliegend oder in einem Hohlraum angeordnet sein, es kann auch mit dem Linsenmaterial in Kontakt stehen. Bevorzugt ist das Optoelement in das Linsengußmaterial eingegossen, d.h. es ist an allen nicht mit anderen Bauteilen wie z.B. dem Halter des Optoelements in Kontakt stehenden Oberflächenbereichen in Linsengußmaterial eingebettet.

Erfindungsgemäß kann die Verbindung zwischen Fassung und Linsengußmaterial mittels Klebstoff hergestellt oder unterstützt sein, der entweder dem Linsengußmaterial beigemengt sein kann oder als separate Schicht vorhanden ist. Bevorzugt wird bei der Verbindung zwischen der Fassung und der Linse jedoch kein Klebstoff verwendet, sondern allein die Adhäsionskräfte zwischen Linsenmaterial und der Fassung bewirken die Befestigung zwischen Linse und Fassung.

Erfindungsgemäß ist es möglich, daß die Optik in dem Lichtsender/Lichtempfängersystem nur aus Optoelement und Linse besteht. Bevorzugt ist jedoch zum Erzielen eines bestimmten Strahlenverlaufs außerdem eine Blende, insbesondere eine Lochblende, vorgesehen.

Erfindungsgemäß ist es möglich, daß das Lichtsender/Lichtempfängersystem ausschließlich sphärische Linsenflächen auf weist. Bevorzugt weist jedoch eine Linse eine asphärische Form auf, z.B. die Form eines Abschnitts eines Ellipsoids.

Erfindungsgemäß ist es möglich, daß das Lichtsender/Lichtempfängersystem in dem Lichtsenderelement und/oder in dem Lichtempfängerelement jeweils ein einstufiges Linsensystem aufweist. Ebenso ist es möglich, daß das Lichtsender/Lichtempfängersystem in einem Lichtsender- oder in einem Lichtempfängerelement gar kein Linsensystem, sondern nur ein Optoelement aufweist. Bevorzugt weist das Lichtsender/Lichtempfängersystem jedoch in dem Lichtsenderelement und/oder in dem Lichtempfängerelement ein mehrstufiges Linsensystem auf. Solche Linsensysteme sind z.B. besser geeignet, hochgenaue parallele Strahlenverläufe zu erzeugen, wie sie für die Überbrückung größerer Entfernungen bei gleichzeitig hoher Objektauflösung benötigt werden.

Erfindungsgemäß ist es möglich, daß das Lichtsender/Lichtempfängersystem in dem Lichtsenderelement und/oder in dem Lichtempfängerelement beliebige Trennflächen aufweist, die z.B. aufgrund des Herstellens einer Linse in mehreren Arbeitsschritten bedingt sein können. Bevorzugt weist das Linsengußmaterial jedoch keine Trennfläche auf, die infolge des Herstellens in mehreren Arbeitsschritten bedingt ist.

Gemäß einer anderen bevorzugten Ausführungsform weist das Lichtsender/Lichtempfängersystem als Linsengußmaterial unterschiedliche Materialien mit unterschiedlichen Brechungsindizes auf. Vorteilhaft kann mit aneinander angrenzenden Linsenteilkörpern aus solchen Materialien mit unterschiedlichen Brechungseigenschaften ein mehrstufiger Achromat gebildet sein, wodurch sich besondere Effekte erzielen lassen. Für derartige Linsenaufbauten in dem Lichtsender/Lichtempfängersystem eignet sich das erfindungsgemäße Herstellungsverfahren besonders gut, weil beim direkten Einfüllen eines weiteren Linsengußmaterials auf die Oberfläche einer bereits fertiggestellten Teillinse die Paßgenauigkeit der zusätzlichen Teillinse gegenüber der fertiggestellten Teillinse von vorneherein sichergestellt ist.

Erfindungsgemäß ist es möglich, daß das Lichtsenderelement in dem Lichtsender/Lichtempfängersystem derart gestaltet ist, daß Strahldurchmesser von bis zu 5 mm oder darüber mit Öffnungswinkeln von bis zu 5 Grad oder darüber erzeugt werden. Bevorzugt ist das Lichtsenderelement in dem Lichtsender/Lichtempfängersystem jedoch derart gestaltet, daß damit Lichtstrahlen mit einem Strahldurchmesser von weniger als 1 mm, inbesondere weniger als 0,5 mm, und einem Öffnungswinkel von unter 1 Grad, insbesondere unter 30 Winkelminuten, erzeugbar sind.

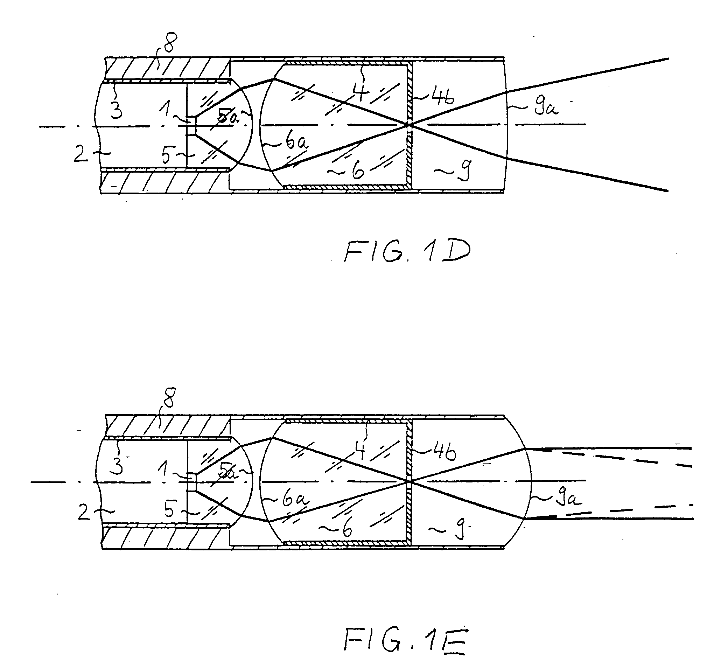

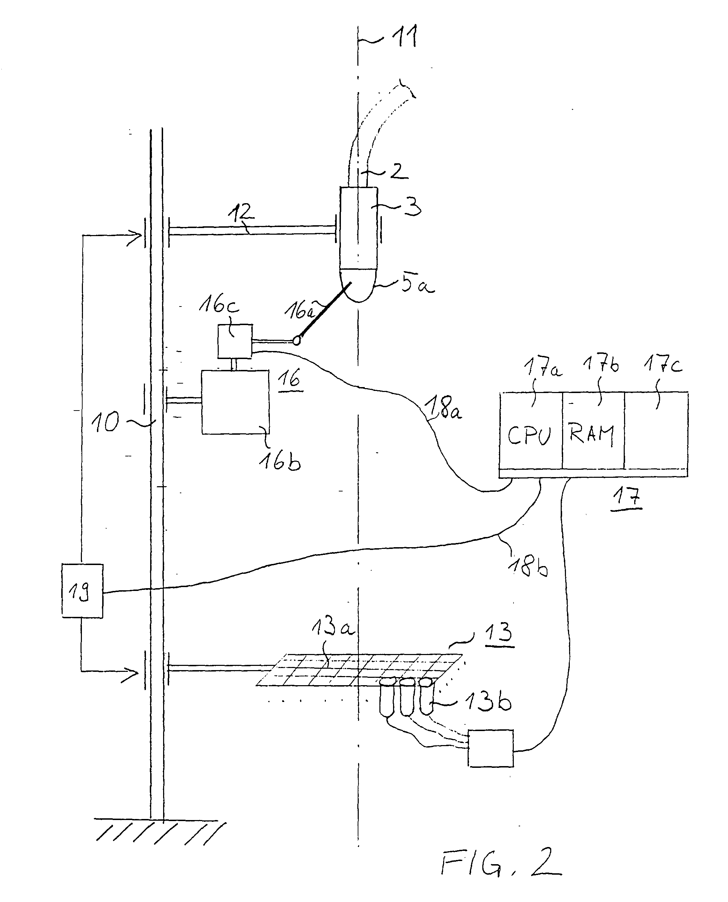

Bevorzugte Ausführungsformen der Erfindung werden in Verbindung mit der Zeichnung näher beschrieben. In der Zeichnung zeigt:
Fig. 1A bis 1E den Lichtstrahlverlauf durch ein mikrooptisches System während verschiedener Herstellungsstadien des Herstellungsvorgangs einer Linse des Systems mittels einer Ausführungsform des erfindungsgemäßen Verfahrens.
Fig. 2 eine Prinzipdarstellung einer Ausführungsform der erfindungsgemäßen Vorrichtung zum Herstellen von Linsen mikrooptischer Systeme.
Fig. 3 eine perspektivische Darstellung eines Lichtsender-Bauelements gemäß einer Ausführungsform des erfindungsgemäß hergestellten Lichtsender/Lichtempfängersystems.
Fig. 4 eine Axial-Radial-Schnittdarstellung des Lichtsender-Bauelements gemäß der Ausführungsform des erfindungsgemäß hergestellten Lichtsender/Lichtempfängersystems aus Figur 3.

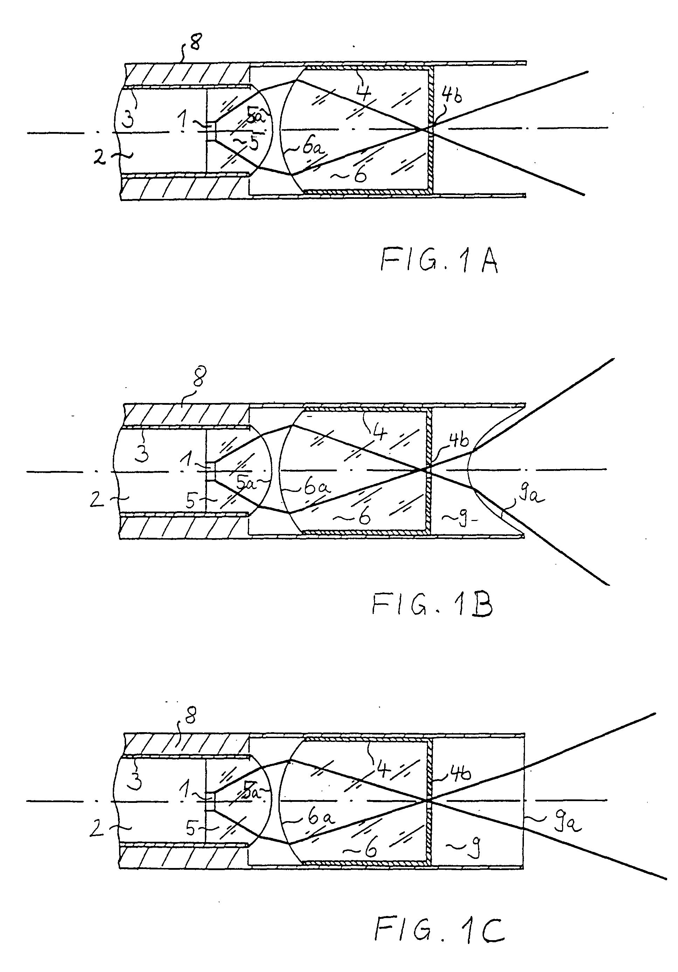

In der Fig. 1A bis 1E ist das erfindungsgemäße Herstellungsverfahren dargestellt, indem eine in einem dreistufigen mikrooptischen System gebildete Linse sowie der von einem Optoelement ausgehende jeweils aktuelle Strahlenverlauf durch das mikrooptische System in verschiedenen Herstellungsstadien gezeigt sind.
In Fig. 1A ist das mikrooptische System in einem Stadium gezeigt, in dem der Herstellvorgang für die zu erstellende Linse noch nicht begonnen hat. Ein Optoelement 1, hier ein Lichtemitter, ist an einem zylinderförmigen Träger 2 angebracht. Auf den zylinderförmigen Träger 2 ist eine zylinderhülsenförmige Fassung 3 derart aufgesteckt, daß die Fassung 3 in der Richtung auf die axiale Stirnfläche des zylinderförmigen Trägers 2 hin, an der das Optoelement 1 angebracht ist, den zylinderförmigen Träger 2 überragt. Innerhalb des auskragenden Teils ist die Fassung 3 mit Linsengußmaterial 5 derart aufgefüllt, daß eine konvexe erste Linsenfläche 5a gebildet ist, deren Randlinie entlang der Abschlußkante der Zylinderhülse der Fassung 3 verläuft. Das Optoelement 1 ist in das Linsengußmaterial 5 eingegossen.
Auf die Fassung 3 ist eine rohrförmige weitere Fassung 8 aufgeschoben, die die Fassung 3 auf der Seite des zylinderförmigen Trägers 2, auf der das Optoelement 1 angebracht ist, überragt. In die weitere Fassung 8 ist eine rohrförmige dritte Fassung 4 eingeschoben. Die dritte Fassung 4 ist an ihrem Rohrende, das von dem Optoelement 1 abgewandt ist, mit einer Blende 4b versehen, die in dem Bereich der Rohrachse ihre Blendenöffnung aufweist. Auf der dem Optoelement 1 zugewandten Seite der Blende 4b ist die dritte Fassung 4b mit Linsengußmaterial 6 derart aufgefüllt, daß eine konvexe zweite Linsenfläche 6a gebildet ist, deren Randlinie entlang der Abschlußkante der Zylinderhülse der Fassung 8 verläuft.
Die Fassung 4 mit der Blende 4b und der Linsenfläche 6a ist so weit in die Fassung 8 eingeschoben, daß die Linsenflächen 5a und 6a einen Abstand voneinander aufweisen. Das vom Optoelement 1 abgewandte Ende der Fassung 8 ragt über die Fassung 4 hinaus, so daß innerhalb des Rohrendes der Fassung 8, das an der von dem Optoelement 1 abgewandten Seite angeordnet ist, zwischen der Rohröffnung und der Blende 4b der Fassung 4 ein Hohlraum vorhanden ist, in den Linsengußmaterial 9 unter Bilden einer dritten Linsenfläche 9a einfüllbar ist.
Das Optoelement 1 ist als Lichtemitter ausgebildet und in Figur 1A ist der von dem Optoelement ausgehende Strahlenverlauf durch das optische System mit der ersten Linsenfläche 5a und der zweiten Linsenfläche 6a eingezeichnet. Der Lichtstrahl fällt durch die Blende 4b und hat dahinter einen sehr großen Öffnungswinkel.
Aus den Figuren 1B bis 1E sind verschiedene Stadien der Herstellung der dritten Linsenfläche 9a einschließlich des sich daraufhin einstellenden Strahlenverlaufs ersichtlich.
Aus Figur 1B ist ein Herstellungsstadium der Linsenfläche 9a ersichtlich, in dem nur wenig Linsenmaterial 9 in die Fassung 8 eingefüllt ist. Es ist ein Meniskus ausgebildet, der zunächst innerhalb des Röhrchens der Fassung 8 seinen Scheitel hat, sowie eine konkave Linsenfläche 9a. Durch die Brechung an der sich in der Herstellung befindenden dritten Linsenfläche 9a erhält der Lichtsstrahl einen gegenüber dem Stadium aus Figur 1A noch größeren Öffnungswinkel.
Mit zunehmendem Fortschreiten des Einfüllvorgangs nähert sich die Linsenfläche 9a mit ihrem Scheitel der Öffnung und wird immer flacher. Aus Figur 1C ist das Herstellungsstadium ersichtlich, in dem die Linsenfläche 9a eine plane Gestalt hat. Gegenüber dem Herstellungsstadium aus Figur 1B ist der Öffnungswinkel des Lichtstrahls wieder vermindert.
Aus Figur 1D ist ein Stadium ersichtlich, in dem unter Zugabe weiteren Linsengußmaterials 9 der Scheitel der Linsenfläche 9a aus der Öffnung der Fassung 8 herausgetreten ist und gleichzeitig leicht konvexe Wölbung angenommen hat. Der Öffnungswinkel des austretenden Strahls hat sich stark vermindert.
Am Schluß des Einfüllvorganges von Linsengußmaterial 9 weist die Linsenfläche 9a eine konvexe Wölbung auf, wie aus Figur 1E ersichtlich ist. Ein Strahlenverlauf nach Abschluß des Einfüllens ist hinter dem Austritt aus dem Linsengußmaterial 9 mit gestrichelten Linien dargestellt. Der austretende Strahl konvergiert und erreicht in einem bestimmten Abstand, der vorgegeben sein kann, hinter dem Linsensystem seinen Brennpunkt.
Mit durchgezogenen Linien ist der Strahlenverlauf hinter der Linsenfläche 9a dargestellt, der sich bei einer anderen Einfüllmenge von Linsengußmaterial 9 einstellt. Diese andere Einfüllmenge entspricht einer geringfügig anderen Form der Linsenfläche 9a (in Figur 9a nicht dargestellt). Wie aus dem in Figur 1E durchgezogen eingezeichneten Schritt ersichtlich, stellt sich ein im wesentlichen paralleler Strahl ein. Ein solcher Strahl kann ohne wesentlichen Verlust an Lichtintensität oder Strahlungsdichte über eine weite Entfernung geführt werden und eignet sich dadurch gut für Lichtschrankensysteme hoher Auflösung.
Infolge der Gesetzmäßigkeiten der Oberflächenspannung weist die Meniskusfläche in allen Stadien annähernd die Form einer Teilsphäre auf. Für die Linsenfläche, die sich z.B. infolge von absolut dominierenden Kohäsionkräften sphärisch ausbildet, gelten die Gesetzmäßigkeiten der klassischen Optik.
Aus Figur 2 ist ein prinzipieller Aufbau einer Vorrichtung zum Herstellen von Linsen mikrooptischer Systeme gemäß einer Ausführungsform der Erfindung ersichtlich.
Eine Halterungsschiene 10, die parallel zu der optischen Achse 11 der Vorrichtung verläuft, stützt einen Halter 12 ab, an dem der zylinderförmige Träger 2 mit dem Optoelement 1 und die Fassung 3 sowie gegebenenfalls zusätzliche optische Bauelemente in der gewünschten relativen Lage zueinander abgestützt sind. Die Halterungsschiene 10 ist dabei vertikal angeordnet und der Halter 12 ist derart gestaltet, daß die Fassung 3 vertikal angeordnet wird und das Ende der Fassung 3, an dem die Linsenfläche 5a entstehen soll, nach unten ausgerichtet ist. Auf diese Weise wird die Schwerkraft beim Erzeugen der Linsenfläche 5a ausgenutzt, um eine asphärische Linsenform zu erhalten.
An der Halteschiene 10 ist verschiebbar der Bildmesser 13 abgestützt, der eine Meßfläche 13a mit einer Vielzahl von optischen Sensoren 13b aufweist. Durch Verstellen der Lage des Bildmessers 13 entlang der Schiene ist ein vorbestimmten Abstand zwischen Fassung 3 und Bildmesser 13 in Axialrichtung einstellbar. Die Meßfläche 13 ist relativ zu der optischen Achse der Vorrichtung senkrecht angeordnet. Die optische Achse verläuft im wesentlichen durch den Mittelpunkt der Meßfläche.
In einer Dosiereinheit 16 ist eine Dosierkanüle 16a vorgesehen, mit der flüssiges Linsenmaterial positionsgenau an eine Stelle gebracht werden kann, an der eine Linse hergestellt werden soll. Dazu ist die Stellung der Dosierkanüle 16a variabel einstellbar. In dieser Ausführungsform ist die Dosiereinheit 16 derart angeordnet, daß die Dosierkanüle 16a in der von dem Optoelement abgewandten Seite der Fassung 3 endet. Die Dosiereinheit weist des weiteren einen Materialbehälter 16b, in dem flüssiges Linsengußmaterial aufnehmbar ist, und eine Linsengußmaterialfördereinrichtung 16c, z.B. eine Pumpe auf, mit der das Linsengußmaterial dosiert durch die Kanüle förderbar ist.
Diese Ausführungsform der Vorrichtung zum Herstellen von Linsen mikrooptischer Systeme weist des weiteren eine Steuereinheit 17 auf, die über Signalleitungen mit den mikrooptischen Sensoren 13b verbunden ist, die die Meßfläche 13a des Bildmessers 13 bilden. Die Steuereinheit weist einen Hauptprozessor CPU 17a, einen Arbeitsspeicher RAM 17b und einen zusätzlichen Speicher 17c auf. In dem zusätzlichen Speicher sind Daten im Zusammenhang mit bestimmten Linsenausführungen abspeicherbar, die mit der Vorrichtung hergestellt werden können. Insbesondere sind Informationen abspeicherbar, die Gestalt und Größe des vorgegebenen Bildes betreffen, bei dessen Erreichen der Einbringvorgang zum Herstellen einer bestimmten Linse abzubrechen ist.
Zum Durchführen einer Ausführungsform des erfindungsgemäßen Verfahrens können diese Informationen bzgl. einer Linsenausführung aus dem zusätzlichen Speicher 17c in den Arbeitsspeicher RAM 17b geladen werden und zusammen mit einem Verarbeitungsprogramm zur Durchführung des erfindungsgemäßen Verfahrens abgearbeitet werden.
Die Steuereinheit 17 ist über eine Signalleitung 18a mit der Dosiereinheit 16 verbunden. Über diese Signalleitung 18a sind bei der Verarbeitung von der Steuereinheit 17 erzeugte Treibersignale zum Fördern von Linsengußmaterial an die Dosiereinheit 16 sendbar.
Die gezeigte Ausführungsform der Erfindung weist außerdem einen Abstandmesser 19 auf, mit dem der Abstand zwischen Bildmesser 13 und der Fassung 3 meßbar ist. Der Abstandmesser 19 ist ebenfalls über eine Signalleitung 18b mit der Steuereinheit 17 verbunden. Die gemessenen Abstandswerte sind von der Steuereinheit 17 aufnehmbar und bei der Ermittlung der Signale zum Antreiben eines Dosiervorgangs berücksichtigbar.

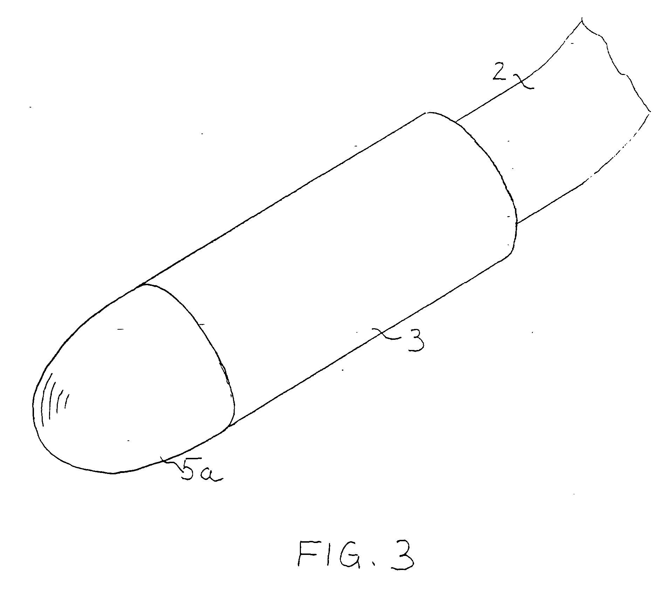

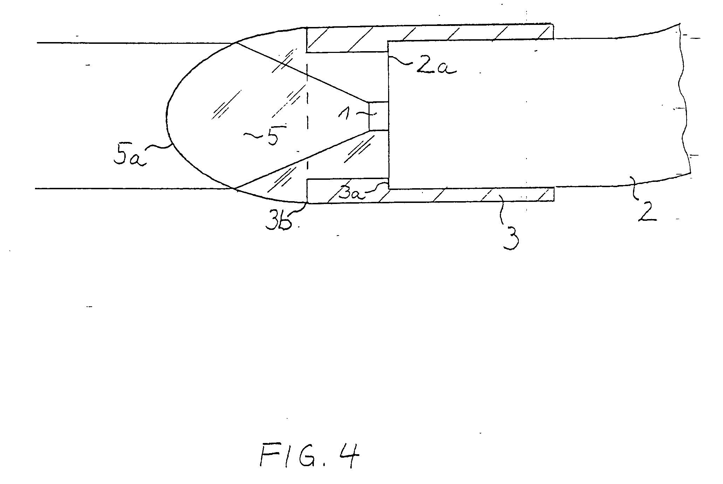

Die Figuren 3 und 4 zeigen eine Ausführungsform eines Lichtsenderelements des erfindungsgemäß hergestellten mikrooptischen Lichtsender/Lichtempfängersystems. Aus Figur 3 ist in perspektivischer Darstellung der Aufbau des Lichtsenderelements des erfindungsgemäß hergestellen mikrooptischen Lichtsender/Lichtempfängersystems ersichtlich. Die vorliegende Ausführungsform weist einen zylinderförmigen Träger 2 auf, der als biegsame elektrische Leitung ausgebildet ist und an seinem von dem Optoelement 1 abgewandten Ende daher in eine nicht weiter zylinderförmige Form mit Kreisquerschnitt übergeht. Der zylinderförmige Träger 2 führt in die Fassung 3. An dem dem zylinderförmigen Träger 2 abgewandten Ende der Fassung 3 ist eine Linsenfläche 5a in konvexer Form ausgebildet. Die Linsenfläche hat die Gestalt eines Ellipsoidabschnitts.
Aus Figur 4 ist der detaillierte innere Aufbau des Lichtsenderelements des erfindungsgemäß hergestellten mikrooptischen Lichtsender/Lichtempfängersystems aus Figur 3 ersichtlich. Die Fassung 3 ist im wesentlichen als kapillares Zylinderröhrchen ausgebildet. An dem dem zylinderförmigen Träger 2 zugewandten Ende ist an der Rohrinnenfläche eine absatzförmige Rohrerweiterung vorhanden. Die Rohrerweiterung wird von einem Absatz gebildet, der als axialer Anschlag 3a mit der axialen Anschlagfläche 2a an dem zylinderförmigen Träger 2 in Kontakt steht. Im Zentrum der Stirnseite des zylinderförmigen Trägers 2 ist das Optoelement 1 befestigt. An dem dem zylinderförmigen Träger 2 abgewandten Ende der Fassung 3 ist am Ende der Rohraußenfläche eine Kante 3b ausgebildet. Der Endbereich der Fassung 3 ist mit Linsengußmaterial 5 gefüllt. Es ist eine konvexe Linsenfläche 5a gebildet, deren Randlinie entlang der Kante 3b verläuft. Bei der hier vorliegenden röhrchenförmigen Fassung 3 entspricht ein Verlauf der Randlinie der Linsenfläche 5a an der Außenkante des Röhrchenendes dem sich stets einstellenden energieärmsten Zustand der Linsenfläche 5a. Das Linsengußmaterial ist derart in die Fassung 3 eingegossen, daß es das Optoelement 1 vollständig umschließt, wo dieses nicht mit dem zylinderförmigen Träger 2 in Berührung ist. Das Optoelement 1 ist also in das Linsengußmaterial 5 eingebettet. Die Linsenfläche 5a hat im wesentlichen die Form eines Ellipsoidabschnitts und ist derart ausgebildet und angeordnet, daß sie das von dem Optoelement in alle Richtungen gleichförmig emittierte Lichtstrahlenbündel zu einem im wesentlichen parallelen Lichtstrahlenbündel bricht, wie aus dem in Figur 4 eingezeichneten Strahlengang zu entnehmen ist.
Das in Figur 4 gezeigte Lichtsenderelement gemäß einer Ausführungsform des mikrooptischen Lichtsender/Lichtempfängersystems, das mittels eines erfindungsgemäßen Herstellungsverfahrens zum Herstellen von Linsen mikrooptischer Systeme gefertigt werden kann. Die Fassung 3 wird unter Zusammenwirken der Axialanschläge 2a und 3a auf den zylinderförmigen Träger 2 gesteckt. Anschließend wird das Optoelement 1, das an dem zylinderförmigen Träger 2 abgestützt ist und das im vorliegenden Fall eine Lichtquelle ist, bestromt und damit zum Leuchten gebracht. Der Strahl der Abbildung dieser Lichtquelle durch das sich in der Entstehung befindende einstufige mikrooptische System wird auf eine Meßebene auf der von dem Optoelement 1 abgewandten Seite der Fassung 3 geworfen. Abhängig von der Größe und/oder Gestalt dieser Abbildung wird der Füllvorgang zum Erzeugen der Linsenfläche 5a in der Fassung 3 angetrieben. Um der Linsenfläche 5a die gewünschte Ellipsoidform zu verleihen, wird die Fassung 3 während des Herstellvorgangs so ausgerichtet, daß das dem Zylinderförmigen Träger 2 abgewandte Ende der Fassung 3 nach unten orientiert ist. Sobald die gewünschte Form der Abbildung erreicht ist, wird der Füllvorgang abgebrochen und das Linsengußmaterial 5 ausgehärtet.

## Patentansprüche

1. Verfahren zum Herstellen von Linsen mikrooptischer Systeme, insbesondere optischer Sensorsysteme, bei dem
- ein aushärtbares flüssiges Linsenmaterial (5, 9) in eine Fassung (3, 8) eingebracht wird, die als Linsenträger für die herzustellende Linse dient, und an einer Öffnung der Fassung (3, 8) eine gewölbte Linsenfläche (5a, 9a) gebildet wird;
- das in die Fassung (3, 8) eingebrachte Linsenmaterial (5, 9) während dessen Einbringens von Licht durchstrahlt wird, das von einem zu dem mikrooptischen System gehörenden Lichtemitter als Optoelement (1), der in einer Lage relativ zu der Linse angeordnet ist, die es im fertiggestellten mikrooptischen System einnehmen soll, erzeugt wird;
- gleichzeitig mit dem Einbringvorgang die Abbildung des von dem Lichtemitter ausgesandten Lichtstrahls in einer ausgewählten Ebene auf der dem Lichtemitter entgegengesetzten Seite der Fassung (3, 8) vermessen wird ;
- der Einbringvorgang abgebrochen wird, wenn die Abbildung eine vorgegebene Größe und/oder Gestalt erreicht hat;
- das aushärtbare flüssige Linsenmaterial (5, 9) ausgehärtet wird.

2. Verfahren zum Herstellen von Linsen mikrooptischer Systeme, insbesondere optischer Sensorsysteme, bei dem
- ein aushärtbares flüssiges Linsenmaterial (5, 9) in eine Fassung (3, 8) eingebracht wird, die als Linsenträger für die herzustellende Linse dient, und an einer Öffnung der Fassung (3, 8) eine gewölbte Linsenfläche (5a, 9a) gebildet wird;
- das in die Fassung (3, 8) eingebrachte Linsenmaterial (5, 9) während dessen Einbringens von Licht durchstrahlt wird, das von einem zu dem mikrooptischen System gehörenden Lichtsensor als Optoelement (1), der in einer Lage relativ zu der Linse angeordnet ist, die er im fertiggestellten mikrooptischen System einnehmen soll, detektiert wird;
- gleichzeitig mit dem Einbringvorgang ein infolge des auf den Lichtsensor einfallenden Lichts erzeugtes Signal vermessen wird;
- der Einbringvorgang abgebrochen wird, wenn das Signal eine vorgegebene Größe und/oder Gestalt erreicht hat;
- das aushärtbare flüssige Linsenmaterial (5, 9) ausgehärtet wird.

3. Verfahren nach Anspruch 1 oder 2, wobei dem flüssigen Linsenmaterial unter gezieltem Einsatz von Gravitation und/oder anderen Kräften eine asphärische Gestalt gegeben wird, in der die Linse ausgehärtet wird.

4. Verfahren nach einem der Ansprüche 1 bis 3, wobei unter Einbringen und Aushärten eines Linsengußmaterials zunächst eine Linsenfläche erzeugt wird und danach unter Einbringen zusätzlichen Linsengußmaterials mit einem von dem Brechungsindex des zuerst eingebrachten Linsengußmaterials unterschiedlichen Brechungsindex und Aushärten des zusätzlichen Gußmaterials ein Achromat gebildet wird.

5. Verfahren nach einem der Ansprüche 1 bis 4, wobei der Einbringvorgang abgebrochen wird, wenn die vermessene Abbildung des Lichtstrahls bzw. das von dem Lichtsensor erzeugte Signal eine von der der gewünschten optischen Verarbeitung des herzustellenden mikrooptischen Systems entsprechenden Größe um ein bestimmtes Maß abweichende Größe erreicht, wobei die Abweichung derart bemessen ist, daß die Veränderung der optischen Verarbeitung, die infolge einer Schrumpfung beim Aushärten des Linsenmaterials und/oder infolge einer Veränderung des Brechungsindex des Linsenmaterials beim Aushärten auftritt, ausgeglichen wird.

6. Verfahren nach einem der Ansprüche 1 bis 5, wobei die Fassung (3) vor dem Einbringvorgang in die gewünschte Relativlage zu dem Optoelement (1) gebracht wird, indem sie mit einem Träger (2), auf dem das Optoelement (1) angebracht ist, in eine Relativlage gebracht wird, indem eine in der Fassung (3) ausgebildete Anschlagschulter (3a) gegen einen an dem Träger (2) ausgebildeten Anschlag (2a) geschoben wird.

7. Verfahren nach einem der Ansprüche 1 bis 6, wobei vor dem Einbringvorgang an der Fassung (3) eine zusätzliche Fassung (8, 4) angeordnet wird, die eine Blende (4b) oder eine vorher gefertigte Linsenfläche (6a) trägt.

8. Vorrichtung zum Herstellen von Linsen mikrooptischer Systeme mit
- einem Halter (12), von dem eine Fassung (3) und ein Optoelement (1) entlang deren gemeinsamer optischer Achse in einer definierten Lage relativ zueinander aufnehmbar sind;
- einem Bildmesser (13) aus auf einer Meßfläche (13a) angeordneten mikrooptischen Sensoren (13b), mit dem Gestalt und/oder Größe des Bildes eines von dem Optoelement (1) ausgehend auf die Meßfläche (13a) treffenden Lichtstrahls meßbar sind und dessen Meßfläche (13a) zu der optischen Achse senkrecht steht, wobei der Bildmesser (13) und der Halter (12) in Richtung der optischen Achse relativ zueinander einstellbar positionierbar sind;
- einer Dosiereinheit (16), mit der ein flüssiges aushärtbares transparentes Linsenmaterial dosiert in die Fassung (3) bringbar ist; und
- einer Steuereinheit (17), mit der auf der Basis von Gestalt und/oder Größe des von dem Bildmesser (13) gemessenen Bildes des Optoelements (1) und eines vorgegebenen Bildes Steuersignale zum Steuern eines Dosiervorgangs ermittelbar und an die Dosiereinheit (16) sendbar sind.

9. Vorrichtung zum Herstellen von Linsen mikrooptischer Systeme nach Anspruch 8, die einen Abstandmesser (19) aufweist, mit dem der Abstand zwischen der Fassung (3) und der Meßebene meßbar ist.

10. Vorrichtung zum Herstellen von Linsen mikrooptischer Systeme mit
- einem Halter (12), von dem eine Fassung (3) und ein Lichtsensor entlang deren gemeinsamer optischer Achse in einer definierten Lage relativ zueinander aufnehmbar sind;
- einem Signalmesser, der an einen Ausgang des Lichtsensors angeschlossen ist und mit dem Gestalt und/oder Größe des von dem Lichtsensor infolge darauf auftreffenden Lichts erzeugten Signals meßbar sind;
- einer Dosiereinheit (16), mit der ein flüssiges aushärtbares transparentes Linsenmaterial dosiert in die Fassung (3) bringbar ist; und
- einer Steuereinheit (17), mit der auf der Basis von Gestalt und/oder Größe des von dem Signalmesser gemessenen Signals Steuersignale zum Steuern eines Dosiervorgangs ermittelbar und an die Dosiereinheit (16) sendbar sind.

11. Vorrichtung zum Herstellen von Linsen mikrooptischer Systeme nach einem der Ansprüche 8 bis 10, wobei von dem Halter (12) die Fassung (3) derart aufnehmbar ist, daß die Fassung (3) mit der in ihr ausgebildeten mit Linsenmaterial zu befüllenden Öffnung in Richtung der Gravitationskraft ausrichtbar ist.

## Claims

1. Method for producing lenses of microoptical systems, in particular of optical sensor systems, in which
- a curable liquid lens material (5, 9) is introduced into a mount (3, 8) which serves as a lens holder for the lens to be produced, and a convex lens surface (5a, 9a) is formed at an opening of the mount (3, 8);
- the lens material (5, 9) introduced into the mount (3, 8) is irradiated with light during its introduction, the light being generated by a light emitter which forms an optoelement (1) of the microoptical system and which is disposed in a position relative to the lens which it shall assume in the completed microoptical system;
- the image of the light beam emitted by the light emitter is measured in a selected plane at the side of the mount (3, 8) opposite the light emitter simultaneously with the introduction process;
- the introduction process is terminated when the image has reached a predetermined size and/or shape;
- the curable liquid lens material (5, 9) is cured.

2. Method for producing lenses of microoptical systems, in particular of optical sensor systems, in which
- a curable liquid lens material (5, 9) is introduced into a mount (3, 8) which serves as lens holder for the lens to be produced,' and a convex lens surface (5a, 9a) is formed at an opening of the mount (3, 8);
- the lens material (5, 9) introduced into the mount (3, 8) is irradiated with light during its introduction, the light being detected by an optical sensor which forms an optoelement (1) of the microoptical system and which is disposed relative to the lens in ,a position which it shall assume in the completed microoptical system;
- a signal generated as a result of the light shining in the optical sensor is measured simultaneously with the introduction process;
- the introduction process is terminated when the signal has reached a predetermined size and/or shape;
- the curable liquid lens material (5, 9) is cured.

3. Method according to claim 1 or 2, wherein the liquid lens material is rendered in an aspherical shape by the concerted use of gravitation and/or other forces, and the lens is cured in that shape.

4. Method according to an one of claims 1 to 3, wherein first a lens surface is produced by introducing and curing a lens casting material, and subsequently an achromatic lens is formed by introducing and curing additional lens casting material having a refractive index which differs from the refractive index of the first introduced lens casting material.

5. Method according to any one of claims 1 to 4, wherein the introduction process is terminated when the measured image of the light beam or the signal generated by the optical sensor reaches a size which deviates to a certain extent from size corresponding to the desired optical processing of the microoptical system to be produced, wherein the deviation is rated such that the change in the optical processing resulting from a shrinking during curing of the lens material and/or as a result of a change in the refractive index of the lens material during curing, is compensated for.

6. Method according to claim 1 or 2, wherein prior to the introduction process the mount (3) is brought into the desired position relative to the optoelement (1) by pushing an axial stop (3a) formed on the mount (3) against a stop surface (2a) formed on a holder (2) on which the optoelement (1) is mounted.

7. Method according to any one of claims 1 to 6, wherein prior to the introduction process an additional mount (8, 4) comprising an aperture diaphragm (4b) or a previously produced lens surface (6a) is arranged at the mount (3).

8. Device for producing lenses of microoptical systems, comprising
- a support (12) which can accommodate a mount (3) and an optoelement (1) aligned with their joint optical axis in a defined position relative to each other;
- a photometer device (13) consisting of microoptical sensors (13b) arranged on a measuring surface (13a), by which the shape and/or size of the image of a light beam originating from the optoelement (1) and shining in the measuring surface (13a) can be measured, and whose measuring surface (13a) is perpendicular to the optical axis, wherein the photometer device (13) and the support (12) can be positioned in a manner so as to be adjustable in the direction of the optical axis relative to each other;
- a dosing unit (16) by which a liquid curable transparent lens material can be introduced into the mount (3) in dosed quantities; and
- a control unit (17) by which control signals for controlling a dosing process can be detected on the basis of the shape and/or size of the image of the optoelement (1) measured by the photometer device (13) and of a predetermined image, and can be transmitted to the dosing unit (16).

9. Device for producing lenses of microoptical systems according to claim 8, comprising a distance meter (19) by which the distance between the mount (3) and the measuring plane can be measured.'

10. Device for producing lenses of microoptical systems, comprising
- a support (12) which can accommodate a mount (3) and an optical sensor along their joint optical axis in a defined position relative to each other;
- a signal measuring device which is connected to an output of the optical sensor and by means of which the shape and/or size of the signal generated by the optical sensor as a result of light shining in the optical sensor can be measured;
- a dosing unit (16) by means of which a liquid curable transparent lens material (5) may be introduced into the mount (3) in dosed quantities; and
- a control unit (17) by means of which control signals for controlling a dosing process can be detected on the basis of the shape and/or size of the signal measured by the signal measuring device, and can be transmitted to the dosing unit (16).

11. Device for producing lenses of microoptical sytems according to any one of claims 8 to 10, wherein the support (12) can accommodate the mount (3) such that the opening which is formed in the mount (3) and which is to be filled with lens material (5) is adjustable in the direction of the gravitational force.

## Revendications

1. Procédé de fabrication de lentilles pour systèmes microoptiques, en particulier pour systèmes de capteurs optiques, dans lequel
- une matière liquide durcissable (5, 9) de lentille est introduite dans une monture (3, 8) servant de support de lentille pour la lentille à fabriquer, et où une surface bombée (5a, 9a) de lentille est formée au niveau d'une ouverture de la monture (3, 8);
- la matière (5, 9) de lentille introduite dans la monture (3, 8) est traversée, pendant son introduction, par des rayons de lumière, la lumière étant émise par un émetteur de lumière faisant partie du système microoptique, formant un élément optique (1) placé dans une position relative par rapport à la lentille, position qu'il devra occuper dans le système microoptique fini;
- simultanément à l'opération d'introduction, on mesure la projection du rayon de lumière émis par l'émetteur de lumière, dans un plan sélectionné situé du côté de la monture (3, 8), qui est opposé à l'émetteur de lumière;
- on coupe l'opération d'introduction, lorsque la projection a atteint une taille et/ou une forme prédéfinies;
- on fait durcir la matière de lentille liquide durcissable (5, 9).

2. Procédé de fabrication de lentilles pour systèmes microoptiques, en particulier pour systèmes de détecteurs optiques, dans lequel
- une matière liquide durcissable (5, 9) de lentille est introduite dans une monture (3, 8) servant de support de lentille pour la lentille à fabriquer, et où une surface bombée (5a, 9a) de lentille est formée au niveau d'une ouverture de la monture (3, 8);
- la matière (5, 9) de lentille introduite dans la monture (3, 8) est traversée, pendant son introduction, par des rayons de lumière, la lumière étant détectée par un capteur de lumière faisant partie du système microoptique, formant un élément optique (1) placé dans une position relative par rapport à la lentille, position qu'il devra occuper dans le système microoptique fini;
- simultanément à l'opération d'introduction, on mesure un signal généré suite à l'impact de la lumière sur le capteur de lumière;
- on coupe l'opération d'introduction, lorsque le signal a atteint une amplitude et/ou une forme prédéfinies;
- on fait durcir la matière de lentille liquide durcissable (5, 9).

3. Procédé selon la revendication 1 ou 2, dans lequel on confère à la matière liquide de lentille une forme asphérique grâce à une utilisation précise de la gravitation et/ou d'autres forces, forme dans laquelle on fait durcir la lentille.

4. Procédé selon l'une des revendications 1 à 3, où, en introduisant et en faisant durcir une matière de moulage de lentilles, on crée d'abord une surface de lentille, et où on crée ensuite, en introduisant une matière de moulage de lentilles supplémentaire ayant un indice de réfraction différent de l'indice de réfraction de la matière de moulage de lentilles introduite en premier, et en faisant durcir la matière de moulage supplémentaire, un élément achromatique.

5. Procédé selon l'une des revendications 1 à 4, où l'opération d'introduction est interrompue, lorsque la projection mesurée du rayon de lumière ou le signal généré par le capteur de lumière a atteint une grandeur s'écartant, d'une valeur définie, de la grandeur correspondant au traitement optique souhaité réalisé par le système microoptique à fabriquer, l'écart étant calculé de telle sorte que la modification du traitement optique, qui apparaît à la suite d'un retrait de la matière de lentille lors du durcissement, et/ou à la suite d'une modification de l'indices de réfraction de la matière de lentille lors du durcissement, soit compensée.

6. Procédé selon l'une des revendications 1 à 5, où la monture (3) est amenée dans la position relative souhaitée par rapport à l'élément optique (1), avant l'opération d'introduction, grâce au, fait qu'on la place dans une position relative au moyen d'un support (2) sur lequel est disposé l'élément optique (1), grâce au fait qu'un épaulement de butée (3a) formé sur la monture (3) est amené à porter contre une butée (2a) formée sur le support (2).

7. Procédé selon l'une des revendications 1 à 6, où, avant l'opération d'introduction, une monture supplémentaire (8, 4) est fixée sur la monture (3), portant un diaphragme (4b) ou une surface de lentille (6a) fabriquée au préalable.

8. Dispositif de fabrication de lentilles pour systèmes microoptiques, comportant
- un support (12) qui peut recevoir une monture (3) et un élément optique (1) alignés le long de leur axe optique commun, dans une position relative définie l'un par rapport à l'autre;
- un appareil de mesure d'image (13) constitué de capteurs microoptiques (13b) agencés sur une surface de mesure (13a), appareil à l'aide duquel la forme et/ou la taille de l'image d'un rayon de lumière émis par l'élément optique (1) et frappant la surface de mesure (13a) peuvent être mesurées, et dont la surface de mesure (13a) est perpendiculaire à l'axe optique, l'appareil de mesure d'image (13) et le support pouvant être positionnés de façon réglable l'un par rapport à l'autre dans le sens de l'axe optique;
- une unité de dosage (16) au moyen de laquelle une matière de lentille liquide, durcissable et transparente peut être introduite de façon dosée dans la monture (3); et
- une unité de commande (17) au moyen de laquelle, sur la base de la forme et/ou de la taille de l'image de l'élément optique (1), mesurées par l'appareil de mesure d'image (13), et de celles d'une image prédéfinie, des signaux de commande permettant de commander une opération de dosage peuvent être déterminés et émis à l'unité de dosage (16).

9. Dispositif de fabrication de lentilles pour systèmes microoptiques selon la revendication 8, comprenant un télémètre (19) à l'aide duquel on peut mesurer la distance entre la monture (3) et le plan de mesure.

10. Dispositif de fabrication de lentilles pour systèmes microoptiques, comprenant
- un support (12) qui peut recevoir une monture (3) et un élément optique (1) alignés le long de leur axe optique commun, dans une position relative définie l'un par rapport à l'autre;
- un appareil de mesure de signal relié à une sortie du capteur de lumière, et à l'aide duquel on peut mesurer la forme et/ou la grandeur du signal généré par le capteur de lumière à la suite de l'impact de la lumière sur celui-ci;
- une unité de dosage (16) au moyen de laquelle une matière de lentille liquide, durcissable et transparente peut être introduite de façon dosée dans la monture (3); et
- une unité de commande (17) au moyen de laquelle, sur la base de la forme et/ou de la grandeur du signal, mesurées par l'appareil de mesure de signal, des signaux de commande permettant de commander une opération de dosage peuvent être déterminés et émis à l'unité de dosage (16).

11. Dispositif de fabrication de lentilles pour systèmes microoptiques selon l'une des revendications 8 à 10, où le support (12) peut recevoir la monture (3) d'une manière telle que la monture (3) puisse être orientée, par l'ouverture aménagée dans celle-ci, à remplir de matière de lentille, dans le sens de la force de gravitation.
